# EUROPÄISCHE PATENTSCHRIFT

(11) **EP 3 942 627 B1**
(45) Veröffentlichungstag und Bekanntmachung des Hinweises auf die Patenterteilung: **14.06.2023**
(21) Anmeldenummer: 20719171.9
(22) Anmeldetag: 14.04.2020
(51) Int. Cl.: H01M 4/04, H01M 10/04, B65H 29/40, B65H 31/34, H01M 10/052, H01M 4/139

(54) **VERFAHREN UND VORRICHTUNG ZUR HERSTELLUNG EINES ELEKTRODENSTAPELS**
METHOD AND DEVICE FOR PRODUCING AN ELECTRODE STACK
PROCÉDÉ ET DISPOSITIF POUR PRODUIRE UN EMPILEMENT D'ÉLECTRODES

(30) Priorität: 15.04.2019 DE 102019205428
(43) Veröffentlichungstag der Anmeldung: 26.01.2022
(73) Patentinhaber: VOLKSWAGEN AG, 38440 Wolfsburg (DE)
(72) Erfinder: BÖHM, Dennis, 38302 Wolfenbüttel (DE); BREUER, Alexander, 29227 Celle (DE); JORDAN, Marco, 38229 Salzgitter (DE); FREIFRAU VON BOESELAGER, Christina, 38102 Braunschweig (DE); LEITHOFF, Ruben, 29664 Walsrode (DE); FRÖHLICH, Arian, 31559 Haste (DE)
(74) Vertreter: FDST Patentanwälte
(86) Internationale Anmeldenummer: PCT/EP2020/060411
(87) Internationale Veröffentlichungsnummer: WO 2020/212316

(56) Entgegenhaltungen:
- EP-A1- 2 696 428
- JP-A- S5 469 729
- US-A1- 2019 036 149

## Beschreibung

Die Erfindung betrifft ein Verfahren sowie eine Vorrichtung zur Herstellung eines Elektrodenstapels aus Anoden und Kathoden für eine Lithium-Ionen-Batterie.

Eine solche Lithium-Ionen-Batterie weist zumindest eine Batteriezelle auf, in welcher ein Elektrodenstapel mit einer Anzahl an blattartigen Kathoden (Kathodenblättern, Kathodenfolien) und blattartigen Anoden (Anodenblättern, Anodenfolien) aufgenommen ist, wobei die Kathoden und die Anoden beispielsweise übereinander gestapelt sind, und wobei zwischen den Kathoden und den Anoden jeweils ein Separator angeordnet ist.

Der Elektrodenstapel mit übereinandergestapelten Anoden und Kathoden wird beispielsweise mittels des sogenannten Einzelblattstapelns hergestellt. Typischerweise werden die einzelnen Anoden und die Kathoden hierbei mittels eines Greifersystems (Greifsystems) bewegt. Ein Greifer dieses Greifersystems nimmt die jeweilige Elektrode, also die jeweilige Anode oder Kathode, auf, fördert diese haltend an einen Stapelort und legt die Elektrode dort ab. Allerdings sind solche Greifersysteme vergleichsweise langsam. Infolgedessen ist der Herstellungsprozess eines solchen Elektrodenstapels nachteilig vergleichsweise zeitaufwändig.

Aus der US 2019/036149 A1 ist eine Elektrodenstapelvorrichtung bekannt. Diese umfasst einen Elektrodenträgerabschnitt zur Aufnahme einer Elektrode, die von einer Fördereinrichtung zugeführt ist, sowie ein Zirkulationselement mit einer Schleifenform, das sich in vertikaler Richtung erstreckt und in dem der Elektrodenträgerabschnitt an einer äußeren Umfangsfläche ausgebildet ist. Weiterhin umfasst die Elektrodenstapelvorrichtung eine Stapeleinheit, die auf einer der Fördervorrichtung gegenüberliegenden Seite angeordnet ist, wobei das Umlaufelement dazwischen angeordnet ist, und die eine Vielzahl von Ablageflächen aufweist, auf denen die Elektrode gestapelt wird. Ein Ausstoßabschnitt der Elektrodenstapelvorrichtung ist so konfiguriert, dass er gleichzeitig eine Vielzahl von Elektroden, die jeweils auf einer Vielzahl der Elektrodenträgerabschnitte getragen werden, in Richtung der Ablageflächen des Stapelabschnitts ausstößt.

Der Erfindung liegt die Aufgabe zugrunde, ein besonders geeignetes Verfahren sowie eine Vorrichtung zur Herstellung eines Elektrodenstapels für eine Lithiumlonen-Batterie anzugeben. Insbesondere soll mittels des Verfahrens und/oder mittels der Vorrichtung eine möglichst zeitsparende Herstellung des Elektrodenstapels realisiert sein.

Bezüglich des Verfahrens wird die genannte Aufgabe durch die Merkmale des Anspruchs 1 und hinsichtlich der Vorrichtung durch die Merkmale des Anspruchs 4 erfindungsgemäß gelöst. Vorteilhafte Weiterbildungen und Ausgestaltungen sind Gegenstand der Unteransprüche. Dabei gelten die Ausführungen im Zusammenhang mit der Vorrichtung sinngemäß auch für das Verfahren und umgekehrt.

Bei dem Verfahren zur Herstellung eines Elektrodenstapels aus Anoden und Kathoden für eine Lithium-Ionen-Batterie (Li-lonen-Batterie), werden in einem ersten Schritt die Anoden und die Kathoden in Aufnahmen eines rotatorische angetriebenen oder eines rotatorisch antreibbaren Stapelrads gefördert. Dabei werden die Aufnahmen auch als Fach oder als Tasche und das Stapelrad auch als Förderrad bezeichnet. Vorzugsweise rotiert das Stapelrad mit einer konstanten Drehgeschwindigkeit.

Zweckmäßigerweise wird in jeder der Aufnahmen lediglich eine einzige Kathode oder eine einzige Anode aufgenommen. Die Kathoden und die Anoden werden dabei insbesondere derart in die Aufnahmen gefördert, dass bezüglich einer Umfangsrichtung (Umlaufrichtung) des Stapelrads alternierend Anoden und Kathoden in die Aufnahmen gefördert sind.

Die Anoden und die Kathoden werden zusammenfassend auch als Elektroden bezeichnet. Diese sind insbesondere blattförmig ausgebildet. Die Elektroden weisen also in einer Raumrichtung eine vergleichsweise kleine Ausdehnung auf, mit anderen Worten sind die Elektroden flächig ausgebildet. Die Elektroden werden auch als Elektrodenblätter (sheets), die Anoden und die Kathoden entsprechend als Anodenblätter bzw. Kathodenblätter bezeichnet. Die Anoden oder vorzugsweise die Kathoden sind dabei beidseitig, also an deren Flächenseiten, mit einem Separator (einer Separatorfolie) versehen. Insbesondere sind die Anoden oder die Kathoden mit dem Separator laminiert. Infolge dessen ist im Elektrodenstapel zwischen den Anoden und den Kathoden jeweils ein Separator angeordnet. Die Anoden und die Kathoden weisen zweckmäßigerweise jeweils eine auch als Tab bezeichnete elektrische Kontaktierung auf, welche mittels eines (Zellableiters) Stromableiters der jeweiligen Elektrode gebildet ist.

Jede der laminierten Elektroden weist besonders bevorzugt bezüglich einer mittels dieser aufgespannten Ebene die gleichen Abmessungen wie die nicht mit dem Separator laminierten Elektroden auf, gegebenenfalls mit Ausnahme im Bereich der elektrischen Kontaktierung. Mit anderen Worten stimmt die Ausdehnung der mit Separatorfolie versehenen Elektroden mit in einer durch die jeweilige Elektrode aufgespannten Ebene mit der Ausdehnung der nicht mit dem Separator versehenen Elektroden überein.

In einem zweiten Schritt werden die in den Aufnahmen aufgenommenen Anoden und Kathoden, also die in die Aufnahmen geförderten Anoden und Kathoden, anhand der Rotation des Stapelrads zu einem Stapelfach gefördert. Also werden die Anoden und den Kathoden mittels des Stapelrads geführt zum Stapelfach hin bewegt.

In einem dritten Schritt werden die Anoden und die Kathoden, insbesondere mittels eines oder mittels zwei, vorzugsweise feststehenden, Abstreifarmen im Bereich des Stapelfachs gehalten. Aufgrund der Rotation des Stapelrads werden die Anoden und die Kathoden aus der jeweiligen Aufnahme heraus und in das Stapelfach geführt. Mit anderen Worten werden die Anoden und die Kathoden mittels des Abstreifarms bzw. mittels der Abstreifarme gegen die Rotation des Stapelrads gehalten (gestützt), sodass die jeweilige Aufnahme aufgrund der Rotation des Stapelrads relativ zur zugeordneten Elektrode verstellt und entsprechend die Elektrode aus der jeweiligen Aufnahme in das Stapelfach überführt wird. Dabei werden die Anoden und die Kathoden alternierend im Stapelfach gestapelt. Vorzugsweise werden die Anoden und die Kathoden derart in die Aufnahme des Stapelrades eingebracht, dass die zeitlich erste aus der jeweiligen Aufnahme in das Stapelfach überführte Elektrode eine laminierte Elektrode, insbesondere eine laminierte Kathode, ist.

Insbesondere wird aufgrund der Rotation des Stapelrads eine Luftströmung erzeugt, welche das Überführen der Elektroden aus der jeweiligen Aufnahme in das Stapelfach unterstützt. Insbesondere werden die Elektroden aufgrund dessen in das Stapelfach gedrückt.

In einem vierten Schritt werden unter Bildung des Elektrodenstapels die alternierend gestapelten Anoden und Kathoden im Stapelfach gegeneinander verpresst. Zweckmäßigerweise werden die gegeneinander verpressten Anoden und Kathoden anschließend mittels eines Separatorbandes fixiert, insbesondere umwickelt.

Im Vergleich zu einem ungeführten Absinken der Elektroden lediglich aufgrund der Schwerkraft erfolgt das Fördern der Anoden und der Kathoden mittels des Stapelrads in das Stapelfach vergleichsweise schnell. Weiterhin ist mittels des Stapelrads eine vergleichsweise genaue und definierte Positionierung der Elektroden übereinander realisiert. Des Weiteren werden die Anoden und die Kathoden mittels des Stapelrads greiferlos, also ohne die Verwendung eines Greifers oder einer Greifvorrichtung in das Stapelfach überführt. Vorteilhaft erfolgt aufgrund dessen das alternierende Stapeln der Kathoden und der Anoden, insbesondere im Vergleich zu der eingangs erwähnten Herstellung des Elektrodenstapels mittels einer Greifvorrichtung, vergleichsweise schnell, also zeitsparend. Somit ist eine Prozessrate der Herstellung des Elektrodenstapels vorteilhaft erhöht, mit anderen Worten ist ein Durchsatz erhöht.

Gemäß einer vorteilhaften Weiterbildung werden Im Zuge des ersten Schrittes mindestens eine der Kathoden und mindestens eine der Anoden gleichzeitig in die entsprechenden Aufnahmen des Stapelrades gefördert. Mit anderen Worten wird, während eine der Anoden in die jeweilige Aufnahme des Stapelrads gefördert wird auch eine der Kathoden in die entsprechende Aufnahme gefördert. Insbesondere weist eine Fördereinrichtung zum Fördern der Anoden und der Kathoden in die Aufnahmen des Stapelrads jeweils mindestens ein eigenes Förderband für die Anoden und die Kathoden auf.

Vorteilhaft ist eine Zeitdauer, welche für das Einbringen der Anoden und der Kathoden in das Stapelrad notwendig ist, vergleichsweise kurz und damit einhergehend die Herstellung des Elektrodenstapels vergleichsweise zeitsparend.

Gemäß einer zweckmäßigen Ausgestaltung des Verfahrens ist die Fördergeschwindigkeit der Anoden und der Kathoden in die jeweilige Aufnahme des Stapelrads derart eingestellt, dass die Anoden und die Kathoden zeitlich vor dem Halten durch den Abstreifarm aufgrund einer Reibung relativ zur jeweiligen Aufnahme in den Stillstand abgebremst werden. Mit anderen Worten ist dann eine Relativgeschwindigkeit der Kathoden bzw. der Anoden zur jeweiligen Aufnahme gleich Null. Dabei ist zweckmäßigerweise die Fördergeschwindigkeit möglichst groß. Auf diese Weise ist ein Anschlagen der Kathoden bzw. der Anoden an den Enden der Aufnahmen im Bereich der Drehachse und damit einhergehend eine Gefahr einer Beschädigung der Kathoden bzw. der Anoden vermieden.

Der gemäß dem Verfahren hergestellte Elektrodenstapel ist dabei insbesondere für eine Lithium-Ionen-Batterie, vorzugsweise für eine (Traktions-)Batterie eines elektrisch angetriebenen Kraftfahrzeugs, vorgesehen.

Die Vorrichtung ist zur Herstellung eines Elektrodenstapels aus Anoden und Kathoden für eine Lithium-Ionen-Batterie, beispielsweise für eine (Traktions-) Batterie eines elektrisch angetriebenen Kraftfahrzeugs, eingerichtet und geeignet. Insbesondere wird der Elektrodenstapel mittels der Vorrichtung gemäß einer der oben dargelegten Varianten des Verfahrens hergestellt.

Die Vorrichtung weist ein um eine Drehachse rotatorisch antreibbares Stapelrad mit umfangsseitig eingebrachten und sich in Axialrichtung, also in einer Richtung parallel zur Drehachse, erstreckenden Aufnahmen für die Anoden und für die Kathoden auf. Mit anderen Worten weist das Stapelrad sich nach außen hin, also von der Drehachse weg, erstreckende Arme (Schaufeln) auf, mittels denen die Aufnahmen gebildet sind. Zweckmäßigerweise erstrecken sich die Aufnahmen dabei nach außen entgegen der vorgesehenen Drehrichtung des Stapelrads. So sind die Aufnahmen gegen eine Radialrichtung bezüglich der Drehachse geneigt.

Gemäß einer ersten Variante der Vorrichtung weist das das Stapelrad weiterhin umfangsseitig eine sich in dessen Umfangsrichtung durchgehende Aussparung auf. Die Aussparung spannt also eine Ebene senkrecht zur Drehachse auf. Die Aussparung erstreckt sich durch die Aufnahmen. Mit anderen Worten durchsetzt (durchdringt) die Aussparung die Aufnahmen. Somit sind die Arme in Axialrichtung nicht durchgehend. In die Aussparung ist ein Abstreifarm als Anschlag für die in den Aufnahmen aufgenommenen Anoden und Kathoden bei einer Rotation des Stapelrads, vorzugsweise feststehend, einbringbar, so dass aufgrund der Rotation des Stapelrads die Anoden und die Kathoden gegen eine Rotation mit dem Stapelrad gehalten werden und aus der jeweiligen Aufnahme in ein Stapelfach überführt werden. Geeigneter Weise ist dabei die Aussparung derart ausgebildet, dass ein Abstand des Abstreifarms zur Drehachse kleiner ist als das drehachsenseitige Ende der Aufnahmen.

Zusammenfassend ragt der Abstreifarm in eine in Umfangsrichtung durchgehenden Aussparung des Stapelrads hinein und ist also zumindest teilweise in der Aussparung angeordnet. Die Aussparung spannt also eine Ebene senkrecht zur Drehachse auf. Relativ zur Aufnahme verfährt der Abstreifarm im Zuge der Rotation des Stapelrads folglich durch die Aufnahme. Dabei dient der Abstreifarm als Anschlag bzw. als Stütze für die durch die Rotation des Stapelrads mitgeführten Anoden bzw. Kathoden.

Gemäß einer zweiten Variante der Vorrichtung weist diese zwei Abstreifarme auf, von denen einer bezüglich der Axialrichtung vor und der andere hinter dem Stapelrad angeordnet ist. Mit anderen Worten flankieren die beiden Abstreifarme das Stapelrad beidseitig bezüglich der Axialrichtung. Dabei weist das Stapelrad eine kleinere Ausdehnung in Axialrichtung als die mittels diesem zu fördernden oder geförderten Anoden und Kathoden auf. Also ragen die geförderten Anoden und Kathoden in Axialrichtung aus den Aufnahmen über das Stapelrad hinaus, so dass die Abstreifarme bei einer Rotation des Stapelrads einen Anschlag für die in den Aufnahmen aufgenommenen Anoden und Kathoden bilden. Folglich werden die Anoden und die Kathoden aufgrund der Rotation des Stapelrads aus der jeweiligen Aufnahme in das Stapelfach überführt,

Bei beiden Varianten der Vorrichtung werden die Anoden und die Kathoden im Zuge deren Überführens aus den jeweiligen Aufnahmen werden, insbesondere mittels des als Anschlag wirkenden Abstreifarms bzw. mittels der als Anschlag wirkenden Abstreifarme, zueinander fluchtend im Stapelfach übereinandergestapelt. Zweckmäßigerweise weist das Stapelfach zusätzlich einen Schieber auf. Mittels diesem ist eine zueinander fluchtende Ausrichtung der Anoden und der Kathodenmit verbesserter Genauigkeit ermöglicht. Vorzugsweise werden die Anoden und die Kathoden entlang deren gesamten Umfangs zueinander fluchtend ausgerichtet, mit Ausnahme der elektrischen Kontaktierungen. Der Schieber ist hierzu zu einer diesem gegenüberliegenden Wand des Stapelfachs oder zum Abstreifarm hin verfahrbar. Weiterhin weist das Stapelfach eine Kompressionseinheit zur Erzeugung einer, insbesondere senkrecht zu einem Boden des Stapelfachs orientierten, Presskraft auf die im Stapelfach gestapelten und zueinander fluchten ausgerichteten Anoden und Kathoden auf.

Weiterhin weist die Vorrichtung eine Fördereinrichtung zum Fördern der Anoden und der Kathoden in die Aufnahmen des Stapelrads auf.

Bei der ersten Variante der Vorrichtung weisen die Aufnahmen geeigneter Weise endseitig bezüglich einer Richtung parallel zur Drehachse, also seitlich, jeweils eine Wandung auf. Diese verhindert dabei eine undefinierte Verstellung der Anoden bzw. der Kathoden in einer Richtung entlang der Drehachse. Die Richtung entlang der Drehachse wird hier und im Folgenden auch als Axialrichtung bezeichnet.

Gemäß einer vorteilhaften Ausgestaltung beider Varianten der Vorrichtung sind die Aufnahmen in einer Ebene senkrecht zur Drehachse bogenförmig, vorzugsweise spiralförmig ausgebildet. Also weisen die Aufnahmen in dieser Ebene einen spiralförmigen oder bogenförmigen Querschnitt auf. Vorzugsweise wird dabei eine Krümmung der bogenförmigen Aufnahme von der Umfangsseite zur Drehachse hin, also mit kleiner werdendem Radialabstand zur Drehachse, größer. Aufgrund dessen wird eine Reibungskraft zwischen den Aufnahmen und den in diese geförderten Anoden bzw. Kathoden von der Umfangsseite zur Drehachse, also nach innen, größer, sodass die Anoden und die Kathoden zunehmend stark abgebremst werden. Somit werden die Kathoden und die Anoden zuverlässig zeitlich vor dem Halten der Kathoden und der Anoden durch den Abstreifarm bzw. durch die Abstreifarme relativ zur Aufnahme in den Stillstand abgebremst.

Gemäß einer vorteilhaften Ausgestaltung der Vorrichtung weist die Fördereinrichtung zum Fördern der Kathoden in die entsprechenden Aufnahmen mindestens ein erstes Förderband und zum Fördern der Anoden in die entsprechenden Aufnahmen mindestens ein weiteres erstes Förderband auf. Wie bereits im Zuge des Verfahrens dargestellt, ist es somit ermöglicht, mindestens eine der Kathoden und mindestens eine der Kathoden gleichzeitig in die entsprechenden Aufnahmen des Stapelrades zu fördern. Zudem ist ein Zusammenführen der Anoden und der Kathoden in einem vorangehenden Konfektionierungsschritt bei Verwendung lediglich eines einzigen ersten Förderbands nicht notwendig.

Bei entsprechend hohen Fördergeschwindigkeiten der Anoden und der Kathoden mittels des ersten Förderbandes kann ein Auftrieb der Anoden bzw. der Kathoden durch die Umgebungsluft bewirkt werden, so dass die Anoden und Kathoden unerwünscht vom Förderband abheben und sich unkontrolliert bewegen. Zur Vermeidung dessen ist gemäß einer zweckmäßigen Ausgestaltung der Vorrichtung für jedes der ersten Förderbänder ein parallel orientiertes zweites Förderband vorgesehen. Die zweiten Förderbänder weisen dabei zum zugeordneten ersten Förderband jeweils entgegengesetzte Umlaufrichtungen auf. Die Anoden und die Kathoden sind dabei zwischen dem entsprechenden ersten Förderband und dem entsprechenden zweiten Förderband eingespannt. Die Anoden und die Kathoden sind also in einer Richtung senkrecht zu den Fördergurten der jeweils zugeordneten ersten und zweiten Förderbänder gehalten. Somit ist eine unkontrollierte Bewegung der Anoden und der Kathoden im Zuge deren Förderung in die Aufnahmen des Stapelrads verhindert.

Gemäß einer vorteilhaften Weiterbildung der Vorrichtung ragen die ersten Förderbänder und/oder die zweiten Förderbänder in die Aussparung des Stapelrad oder, bei der zweiten Variante der Vorrichtung, in eine umfangsseitig angeordnete und in dessen Umfangsrichtung durchgehende Aussparung des Stapelrads hinein, sodass die Anoden und die Kathoden tangential in die Aufnahme gefördert werden. Mit anderen Worten sind die ersten und/oder die zweiten Förderbänder, endseitig bezüglich der Förderrichtung der Anoden bzw. der Kathoden in der Aussparung des Stapelrads angeordnet. Also sind die ersten und/oder die zweiten Förderbänder bezüglich der Axialrichtung zwischen den Schaufeln des Stapelrads angeordnet. Auf diese Weise werden die Elektroden vergleichsweise lange mittels der Förderbänder geführt, und/oder es ist eine vergleichsweise hohe Fördergeschwindigkeit der Elektroden in die entsprechenden Aufnahmen und damit einhergehend eine zeitsparende Herstellung des Elektrodenstapels ermöglicht. Zweckmäßig weisen die ersten und die zweiten Förderbänder dabei in einer Richtung, welche senkrecht zur Förderrichtung und in der mittels deren Fördergurte der Förderbänder bzw. mittels der Anoden und Kathoden aufgespannten Ebenen eine kleinere Ausdehnung als die Anoden bzw. die Kathoden auf. Mit anderen Worten ragen die Elektroden in Förderbandquerrichtung über die Förderbänder hinaus.

Gemäß einer geeigneten Ausgestaltung der Vorrichtung ist das Stapelfach zur Entnahme des Elektrodenstapels, insbesondere zusammen mit der Kompressionseinheit vom Stapelrad weg verfahrbar und/oder um eine zur Drehachse parallele Kippachse kippbar.

Gemäß einer geeigneten Ausgestaltung weist der Schieber und/oder der Abstreifarm der Vorrichtung gemäß der ersten Variante eine (Kontaktierungs-)Aufnahme für die elektrischen Kontaktierungen der Anoden und der Kathoden auf. Je nach vorgesehener Ausgestaltung des Elektrodenstapels sind die elektrischen Kontaktierungen der Anoden und der Kathoden an einer gemeinsamen Seite des Elektrodenstapels oder alternativ gegenüberliegenden Seiten des Elektrodenstapels angeordnet. Entsprechend orientiert werden die Anoden und die Kathoden in die Aufnahmen des Stapelrads gefördert. Sofern die elektrischen Kontaktierungen der Anoden und der Kathoden an einer gemeinsamen Seite des Elektrodenstapels angeordnet werden sollen, sind die elektrischen Kontaktierungen der Anoden sowie der Kathoden bezüglich deren Förderrichtung in die jeweilige Aufnahme des Stapelrads vorne oder hinten angeordnet. Insbesondere weist dann der Schieber oder der Abstreifarm die Kontaktierungsaufnahme auf. Sofern die Anoden und die Kathoden an gegenüberliegenden Seiten des Elektrodenstapels angeordnet werden sollen, sind die elektrischen Kontaktierungen der Anoden bezüglich deren Förderrichtung in die jeweilige Aufnahme des Stapelrads vorne und die elektrischen Kontaktierungen der Kathoden bezüglich deren Förderrichtung hinten angeordnet oder umgekehrt. In diesem Fall weisen sowohl der Schieber als auch der Abstreifer jeweils eine Aufnahme für die elektrischen Kontaktierungen auf.

Vorteilhaft ist aufgrund der Kontaktierungsaufnahmen eine Beschädigung der elektrischen Kontaktierungen beim zueinander fluchtenden Ausrichten der Anoden und der Kathoden bzw. im Zuge des Überführens der Anoden und der Kathoden aus der Aufnahme vermieden oder eine Gefahr dessen zumindest verringert.

Nachfolgend wird ein Ausführungsbeispiel der Erfindung anhand einer Zeichnung näher erläutert. Darin zeigen:
- Fig. 1: schematisch eine erste Variante einer Vorrichtung zur Herstellung eines Elektrodenstapels, mit einem um eine Drehachse rotatorisch antreibbaren Stapelrad mit Aufnahmen für Anoden und Kathoden, wobei in eine umfangsseitig durchgehende Aussparung des Stapelrads ein Abstreifarm eingebracht ist, mittels welchem die Anoden und die Kathoden aus den Aufnahmen in ein Stapelfach überführbar sind,
- Fig. 2a: die erste Variante der Vorrichtung schematisch in einer Seitenansicht mit Blickrichtung senkrecht zur Drehachse,
- Fig. 2b: die erste Variante der Vorrichtung schematisch in einer Draufsicht,
- Fig. 3a: eine zweite Variante der Vorrichtung in einer Seitenansicht mit Blickrichtung senkrecht zur Drehachse dessen rotatorisch angetriebenen Stapelrads, wobei bezüglich einer Richtung parallel zur Drehachse vor und nach dem Stapelrad jeweils ein Abstreifarm angeordnet ist, welche als Anschlag für die mittels der Aufnahmen des Stapelrads geförderten Anoden und Kathoden dienen,
- Fig. 3b: die zweite Variante der Vorrichtung schematisch in einer Draufsicht, und
- Fig. 4: in einem Flussdiagramm einen Verfahrensablauf zur Herstellung des Elektrodenstapels.

Einander entsprechende Teile und Größen sind in allen Figuren stets mit gleichen Bezugszeichen versehen.

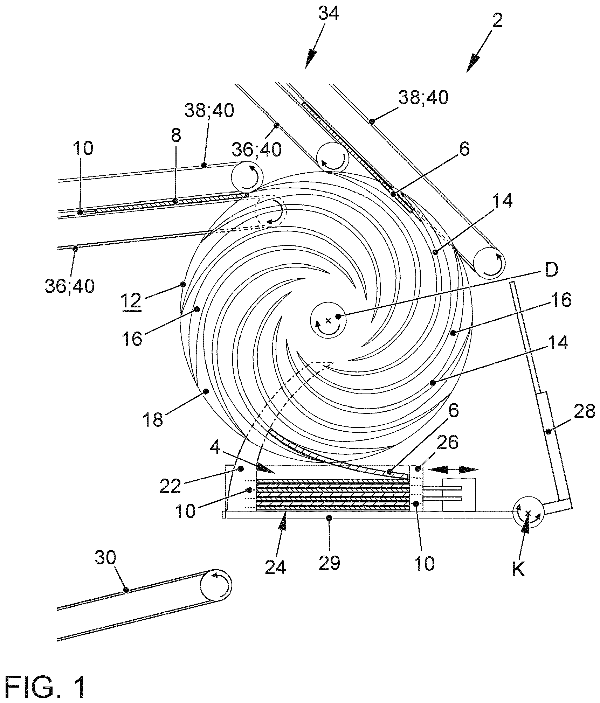

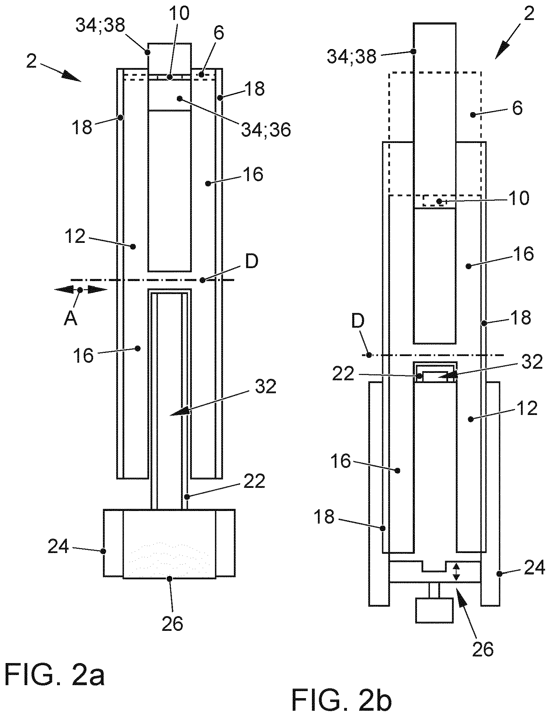

In den Figuren 1 und 2a und 2s ist eine erste Variante einer Vorrichtung 2 dargestellt, welche der Herstellung eines Elektrodenstapels 4 aus Anoden 6 und Kathoden 8 dient.

Die Anoden 6 und die Kathoden 8 sind dabei blattförmig ausgebildet, wobei die Kathoden 8 mit einem Separator laminiert sind, welcher zum Zwecke einer verbesserten Übersichtlichkeit in den Figuren 1 bis 3b nicht weiter dargestellt ist. Des Weiteren weisen die Anoden 6 und die laminierten Kathoden 8 jeweils eine elektrische Kontaktierung 10 auf, welche auch als Tab bezeichnet werden. Die Anoden 6 weisen dabei jeweils bezüglich einer mittels dieser aufgespannten Ebene die gleiche Ausdehnung auf wie jede der laminierten Kathoden 8 in einer mittels dieser aufgespannten Ebene, gegebenenfalls mit Ausnahme im Bereich deren elektrischen Kontaktierungen 10.

Der Elektrodenstapel 4 ist dabei für eine nicht weiter dargestellte Lithium-Ionen-Batterie, beispielsweise für eine (Traktions-)Batterie eines elektrisch angetriebenen Kraftfahrzeugs vorgesehen. Die Vorrichtung 2 weist ein Stapelrad 12 auf, welches um eine Drehachse D rotatorisch antreibbar (drehantreibbar) ist.

Das Stapelrad 12 weist umfangsseitig eingebrachte und sich in Axialrichtung A, also entlang der Drehachse D, erstreckende Aufnahmen 14 für die Anoden 6 und für die Kathoden 8 auf. Die Aufnahmen 14 sind dabei mittels sich vom Bereich der Drehachse D zur Umfangsseite des Stapelrads 12 hin, also nach außen, erstreckenden Armen 16, welche auch als Schaufeln bezeichnet werden, gebildet. Die Arme 16 und somit auch die Aufnahmen 14 sind in einer Ebene senkrecht zur Drehachse D spiralförmig ausgebildet. Also weisen die Aufnahmen 14 in dieser Ebene einen spiralförmigen Querschnitt auf. Dabei wird eine Krümmung der bogenförmigen Aufnahme von der Umfangsseite zur Drehachse D hin, also mit kleiner werdendem Radialabstand zur Drehachse D, größer. Weiterhin erstrecken sich die Aufnahmen 14 nach außen entgegen der mittels eines entsprechenden Pfeils um die Drehachse D repräsentierten Drehrichtung des Stapelrads 12.

Das Stapelrad 12 weist endseitig bezüglich der Axialrichtung A jeweils eine Wandung 18 auf, welche die Aufnahmen 14 begrenzt. Dabei ist in der Fig. 1 zum Zwecke einer Erkennbarkeit die in Blickrichtung vordere Wandung 18 nicht dargestellt. Die Wandung 18 verhindert eine undefinierte Verstellung der Anoden 6 bzw. der Kathoden 8 in einer Richtung entlang der Drehachse D bei der Rotation des Stapelrads 12 sowie im Zuge der Aufnahme der Anoden 6 und der Kathoden 8 in die Aufnahmen 14.

Wie insbesondere in den Figuren 2a und 2b erkennbar ist, weist das Stapelrad 12 eine umfangsseitige Aussparung 20 auf, welche in Umfangsrichtung des Stapelrads 12 durchgehend ist. Die Aussparung 20 erstreckt sich also in einer Ebene senkrecht zur Drehachse D. Die Aussparung 20 weist des Weiteren eine Ausdehnung entgegen der Radialrichtung R zur Drehachse D auf, welche größer als die Ausdehnung der Aufnahmen 14 in dieser Richtung ist. Somit sind die Arme 16 in Axialrichtung A nicht durchgehend.

In der Aussparung 20 ist ein Abstreifarm 22 angeordnet, wobei in der Fig. 1 derjenige Abschnitt des Abstreifarms 22, welcher innerhalb der Aussparung 20 angeordnet ist, strichpunktiert dargestellt ist. Der Abstreifarm 22 dient als Anschlag für die in den Aufnahmen 14 aufgenommenen Anoden 6 und Kathoden 8. Bei der Rotation des Stapelrads 12 werden die in den Aufnahmen 14 angeordneten Anoden 6 und die Kathoden 8 gegen den Abstreifarm 22 verstellt, so dass diese gegen eine weitere Förderung mittels des Stapelrad 12 gehalten werden. Aufgrund der weiteren Rotation des Stapelrad 12 werden die Anoden 6 und die Kathoden 8 aus der jeweiligen Aufnahme 14 und in ein im Bereich des Abstreifarms 22 angeordnetes Stapelfach 24 überführt.

Zur zueinander fluchtenden Ausrichtung der Anoden 6 und der Kathoden 8 weist das Stapelfach 24 einen Schieber 26 auf. Dieser ist hierzu zum Abstreifarm 22 hin verfahrbar, was in der Fig. 1 mittels eines Doppelpfeils dargestellt ist. Weiterhin weist das Stapelfach 24 eine Kompressionseinheit 28 zur Erzeugung einer Presskraft auf die im Stapelfach 24 gestapelten und zueinander fluchtend ausgerichteten Anoden 6 und Kathoden 8 auf. Der Kompressionseinheit 28 ist hierzu durch die Aussparung 20 schwenkbar. Durch das zueinander fluchtende Ausrichten und das miteinander Verpressen der Elektroden 6 und 8 wird der Elektrodenstapel 4 gebildet.

Gemäß einer nicht weiter dargestellten Variante des Stapelfachs 24 ist die Kompressionseinheit 28 in Axialrichtung A verstellbar, so dass die Kompressionseinheit 28 nicht durch die Aussparung 20 hindurch geschwenkt, sondern zwischen dem Stapelrad 12 und einem Boden 29 des Stapelfachs 24 verfahren werden kann.

Das Stapelfach 24 ist weiterhin zusammen mit der Kompressionseinheit 28 und mit dem Abstreifarm 22 um eine parallel zur Drehachse D orientierte Kippachse K kippbar, so dass der Elektrodenstapel 4 aus dem Stapelfach entnommen werden und mittels eines Transportbandes 30 abtransportiert werden kann. Mittels des Transportbands 30 kann der Elektrodenstapel 4, also die gegeneinander verpressten Elektroden 6 und 8 zur weiteren Herstellung der Batterie oder zu einem Magazin oder einem Lager transportiert werden.

In der Figur 1 ist die Vorrichtung 2 mit Blickrichtung entlang der Drehachse D und in den Figuren 2a und 2b mit Blickrichtung senkrecht zur Drehachse D gezeigt und parallel bzw. senkrecht zum Boden 29 des Stapelfachs 24. Dabei ist in den Figuren 2a und 2b zum Zwecke einer verbesserten Übersichtlichkeit der Abstreifarm 22 vereinfacht dargestellt.

Wie insbesondere in der Fig. 2b zu erkennen ist, weist der Schieber 26 sowie der Abstreifarm 22 jeweils eine Kontaktierungsaufnahme 32 für die elektrischen Kontaktierungen 10 der Anoden 6 und der Kathoden 8 auf.

Des Weiteren weist die Vorrichtung 2 eine Fördereinrichtung 34 zum Fördern der Anoden 6 und der Kathoden 8 in die Aufnahmen 14 des Stapelrads 12 auf. Die Fördereinrichtung 34 weist dabei zwei erste Förderbänder 36 auf, wobei eines der ersten Förderbänder 36 lediglich die Anoden 6 in die Aufnahme 14 des Stapelrades 12 fördert und das andere der ersten Förderbänder 36 die Kathoden in die Aufnahmen 14 des Stapelrads 12 fördert. Weiterhin ist jedem der ersten Förderbänder 36 ein zweites Förderband 38 zugeordnet, wobei das jeweilige zweite Förderband 38 parallel zum zugeordneten ersten Förderband 36 angeordnet ist. Der Fördergurt 40 des jeweiligen zweiten Förderbands 38 weist dabei eine entgegengesetzte Umlaufrichtung zum Fördergurt 40 des zugeordneten ersten Förderbands 36 auf. Die ersten Förderbänder 36 und die zugeordneten zweiten Förderbänder 38 sind jeweils derart zueinander beabstandet, dass die Anoden 6 bzw. die Kathoden 8 bei deren Förderung zwischen dem ersten Förderband 36 und dem entsprechenden zweiten Förderband 38 eingespannt sind.

Die ersten Förderbänder 36 ragen dabei abschnittsweise in die Aussparung 20 des Stapelrads 12, sodass die Anoden 6 und die Kathoden 8 tangential in die Aufnahme 14 gefördert werden. Diejenigen Abschnitte der Förderbänder 36 bzw. 38, welcher in die Aussparung 20 hineinragen, sind dabei strichliniert dargestellt.

Wie insbesondere in der Fig. 2a zu erkennen ist, weisen die ersten Förderbänder 36 und die zweiten Förderbänder 38 in einer Richtung, welche senkrecht zur Förderrichtung und in der mittels deren Fördergurte 40 aufgespannten Ebenen verläuft, eine kleinere Ausdehnung als die Anoden 6 bzw. die Kathoden 8 auf. Mit anderen Worten ragen die Elektroden 6 Bzw. 8 in Förderbandquerrichtung über die Förderbänder 38 hinaus.

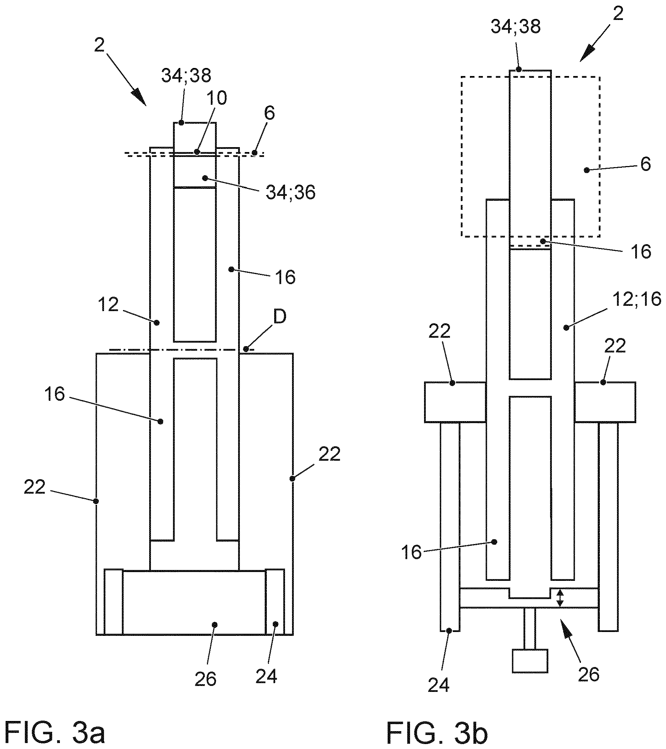

In den Figuren 3a und 3b ist eine zweite Variante der Vorrichtung 2 dargestellt. Mit Ausnahme des im Folgenden dargestellten, gelten für die zweite Variante die oben dargelegten Ausführungen analog und werden hier nicht weiter dargestellt.

Die Vorrichtung 2 weist zwei Abstreifarme 22 auf, welche in Axialrichtung A beidseitig des Stapelrads 12 angeordnet sind. Mit anderen Worten ist einer der beiden Abstreifarme bezüglich der Axialrichtung A vor und der andere Abstreifarm 22 hinter dem Stapelrad 12 angeordnet. Dabei weist das Stapelrad 12 eine kleinere Ausdehnung in Axialrichtung A auf, so dass die in den Aufnahmen 14 aufgenommenen Anoden 6 und die Kathoden 8 in Axialrichtung A beidseitig über das Stapelrad 12 hinausragen. Die beiden Abstreifarme 22 bilden bei einer Rotation des Stapelrads 12 einen Anschlag für die in den Aufnahmen 14 aufgenommenen Anoden 6 und Kathoden 8. Die Anoden 6 und die Kathoden 8 werden folglich gegen eine weitere Förderung aufgrund der Rotation des Stapelrads 12 gestützt und aus der jeweiligen Aufnahme 14 in das Stapelfach 24 überführt.

Im Vergleich zur ersten Variante weist das Stapelrad 12 also keine Wandung 18 auf, welche die Aufnahmen 14 endseitig bezüglich der Axialrichtung A abschließt.

Die Abstreifarme 22 weisen weiterhin keine Kontaktierungsaufnahme 32 für die elektrischen Kontaktierungen 10 der Anoden oder der Kathoden auf. Vielmehr sind die elektrischen Kontaktierungen 10 zwischen den Armen 16 des Stapelrads angeordnet.

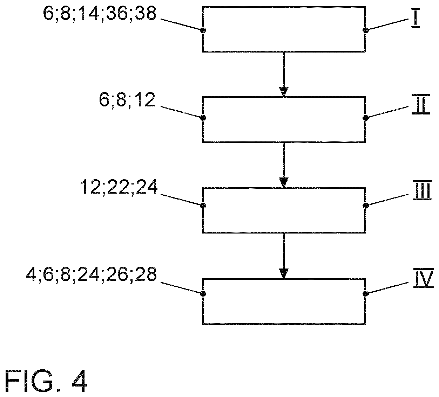

Das in der Fig. 4 gezeigte Flussdiagramm repräsentiert ein Verfahren zur Herstellung eines Elektrodenstapels 4 aus Anoden 6 und Kathoden 8. Vorzugsweise wird hierzu eine Vorrichtung 2 gemäß den Figuren 1 und 2 herangezogen.

In einem ersten Schritt I werden die Anoden 6 und die Kathoden 8 in die Aufnahmen 14 des, insbesondere kontinuierlich, rotatorisch angetriebenen Stapelrads 12 gefördert. Hierbei werden mindestens eine der Anoden 6 und mindestens eine der Kathoden 8 gleichzeitig in die jeweilige Aufnahme 14 des Stapelrads 12 gefördert. Hierzu weist die Vorrichtung 2, wie oben dargelegt, für die Anoden 6 ein erstes Förderband und für die Kathoden 8 ein weiteres erstes Förderband 36 auf.

Dabei wird in jeder der Aufnahmen 14 lediglich eine einzige Kathode 8 oder eine einzige Anode 6 aufgenommen, wobei die Anoden 6 und die Kathoden 8 alternierend in die bezüglich der Umfangsrichtung (Umlaufrichtung) des Stapelrads 12 aufeinanderfolgenden Aufnahmen 14 eingebracht sind.

Die elektrischen Kontaktierungen 10 der Anoden 6 sind dabei bezüglich deren Förderrichtung in die jeweilige Aufnahme 14 des Stapelrads 12 vorne und die elektrischen Kontaktierungen 10 der Kathoden bezüglich deren Förderrichtung hinten angeordnet. Auf diese Weise sind die elektrischen Kontaktierungen 10 der Anoden 6 und der Kathoden 8 an einander gegenüberliegenden Seiten des Elektrodenstapels 4 angeordnet.

In einem zweiten Schritt II werden die in den Aufnahmen 14 aufgenommenen Anoden 6 und Kathoden 8 anhand einer Rotation des Stapelrads 12 zu einem Stapelfach 24 gefördert.

In einem dritten Schritt III des Verfahrens werden die Anoden 6 und die Kathoden 8 mittels des Abstreifarms 22 oder mittels der Abstreifarme 22 im Bereich des Stapelfachs 24 gehalten. Also werden die Anoden 6 und die Kathoden 8 mittels des Abstreifarms 22 bzw. mittels der Abstreifarme 22 gegen die Rotation des Stapelrads 12 gehalten (gestützt), sodass die jeweilige Aufnahme 14 aufgrund der Rotation des Stapelrads 12 relativ zur zugeordneten Elektrode 6 bzw. 8 verstellt und entsprechend die Elektrode 6 bzw. 8 aus der jeweiligen Aufnahme 14 in das Stapelfach 24 überführt wird. Dabei werden die Anoden 6 und die Kathoden 8 alternierend im Stapelfach 24 übereinander gestapelt.

Zudem ist die zeitlich erste aus der jeweiligen Aufnahme 14 in das Stapelfach 24 überführte Elektrode eine laminierte Kathode 8.

Weiterhin ist die Fördergeschwindigkeit der Anoden 6 und der Kathoden 8 in die jeweilige Aufnahme 14 des Stapelrads 12 derart eingestellt, dass die Anoden 6 und die Kathoden 8 zeitlich vor dem Halten durch den Abstreifarm 22 oder die Abstreifarme 22 aufgrund einer Reibung zwischen den Anoden 6 bzw. den Kathoden 8 und der jeweiligen Aufnahme 14 relativ zu dieser in den Stillstand abgebremst wird. Die Einstellung der Fördergeschwindigkeit erfolgt dabei in Abhängigkeit der Form der Aufnahmen 14. Aufgrund der Spiralform der Aufnahmen 14 wird eine Reibungskraft zwischen der jeweiligen Aufnahme 14 und der Elektrode 6 oder 8 zum (drehachsenseitigen) der Drehachse D zugewandten Ende der Aufnahme 14 größer.

In einem vierten Schritt IV werden unter Bildung des Elektrodenstapels 4 die alternierend gestapelten Anoden 6 und Kathoden 8 im Stapelfach 24 mittels des Schiebers 26 fluchtend zueinander ausgerichtet und mittels der Kompressionseinheit 28 gegeneinander verpresst. Hierzu wirkt die Kompressionseinheit 28 mit einer Presskraft auf die im Stapelfach 24 gestapelten und fluchtend zueinander ausgerichteten Anoden 6 und Kathoden 8 ein.

Die Erfindung ist nicht auf das vorstehend beschriebene Ausführungsbeispiel beschränkt. Vielmehr können auch andere Varianten der Erfindung vom Fachmann hieraus abgeleitet werden, ohne den Gegenstand der Erfindung zu verlassen. Insbesondere sind ferner alle im Zusammenhang mit dem Ausführungsbeispiel beschriebenen Einzelmerkmale auch auf andere Weise miteinander kombinierbar, ohne den Gegenstand der Erfindung zu verlassen.

### Bezugszeichenliste

- 2: Vorrichtung
- 4: Elektrodenstapel
- 6: Anode
- 8: Kathode
- 10: elektrische Kontaktierung der Elektrode
- 12: Stapelrad
- 14: Aufnahme
- 16: Arm
- 18: Wandung
- 20: Aussparung
- 22: Abstreifarm
- 24: Stapelfach
- 26: Schieber
- 28: Kompressionseinheit
- 29: Boden des Stapelfachs
- 30: Transportband
- 32: Kontaktierungsaufnahmen
- 34: Fördereinrichtung
- 36: erstes Förderband
- 38: zweites Förderband
- 40: Fördergurt

- I: Fördern der Kathoden und der Anoden in die Aufnahmen des Stapelrads
- II: Fördern der Kathoden und der Anoden zum Stapelfach mittels des Stapelrads
- III: Überführen der Kathoden und der Anoden aus der Aufnahme in das Stapelfach
- IV: Ausrichten und gegeneinander Verpressen der Kathoden und der Anoden

- A: Axialrichtung
- D: Drehachse
- K: Kippachse

## Patentansprüche

1. Verfahren zur Herstellung eines Elektrodenstapels (4) aus Anoden (6) und Kathoden (8) für eine Lithium-Ionen-Batterie, insbesondere eines elektrisch angetriebenen Kraftfahrzeugs, wobei die Anoden (6) oder die Kathoden (8) mit einem Separator versehen sind,
- bei dem die Anoden (6) und die Kathoden (8) in Aufnahmen (14) eines rotatorisch angetriebenen oder rotatorisch antreibbaren Stapelrads (12) gefördert werden,
- bei dem die in den Aufnahmen (14) aufgenommenen Anoden (6) und Kathoden (8) anhand einer Rotation des Stapelrads (12) zu einem Stapelfach (24) gefördert werden,
- bei dem die Anoden (6) und die Kathoden (8) mittels eines Abstreifarms (22) im Bereich des Stapelfachs (24) gehalten und aufgrund der Rotation des Stapelrads (12) aus der jeweiligen Aufnahme (14) in das Stapelfach (24) überführt werden, wobei die Anoden (6) und die Kathoden (8) alternierend im Stapelfach (24) gestapelt werden, und
- bei dem die alternierend gestapelten Anoden (6) und Kathoden (8) im Stapelfach (24) gegeneinander verpresst werden.

2. Verfahren nach Anspruch 1,
**dadurch gekennzeichnet,**
**dass** mindestens eine der Anoden (6) und mindestens eine der Kathoden (8) gleichzeitig in die entsprechenden Aufnahmen (14) des Stapelrads (12) gefördert werden.

3. Verfahren nach Anspruch 1 oder 2,
**dadurch gekennzeichnet,**
**dass** die Fördergeschwindigkeit der Anoden (6) und der Kathoden (8) in die jeweiligen Aufnahmen (14) des Stapelrads (12) derart eingestellt ist, dass die Anoden (6) und die Kathoden (8) zeitlich vor dem Halten durch den Abstreifarm (22) aufgrund einer Reibung relativ zur jeweiligen Aufnahme (14) in einen Stillstand abgebremst werden.

4. Vorrichtung (2) zur Herstellung eines Elektrodenstapels (4) aus Anoden (6) und aus Kathoden (8) für eine Lithium-Ionen-Batterie, insbesondere gemäß dem Verfahren nach einem der Ansprüche 1 bis 3, aufweisend
- ein um eine Drehachse (D) rotatorisch antreibbares Stapelrad (12) mit umfangsseitig eingebrachten und sich in Axialrichtung (A) erstreckenden Aufnahmen (14) für die Anoden (6) und für die Kathoden (8),
- eine Fördereinrichtung (34) zum Fördern der Anoden (6) und der Kathoden (8) in die Aufnahmen (14) des Stapelrads (12),
- einen Abstreifarm (22), welcher in eine in Umfangsrichtung des Stapelrades (12) durchgehende Aussparung (20) einbringbar ist, und welcher bei einer Rotation des Stapelrads (12) einen Anschlag für die in den Aufnahmen (14) aufgenommenen Anoden (6) und Kathoden (8) bildet, so dass die Anoden (6) und die Kathoden (8) aufgrund der Rotation des Stapelrads (12) aus der jeweiligen Aufnahme (14) in ein Stapelfach (24) überführt werden, oder
- zwei Abstreifarme (22), welche in Axialrichtung (A) beidseitig des Stapelrads (12) angeordnet sind, wobei das Stapelrad (12) eine kleinere Ausdehnung in Axialrichtung (A) aufweist als die Anoden (6) und die Kathoden (8), so dass die Abstreifarme (22) bei einer Rotation des Stapelrads (12) einen Anschlag für die in den Aufnahmen (14) aufgenommenen und in Axialrichtung (A) aus den Aufnahmen (14) hinausragenden Anoden (6) und Kathoden (8) bilden und die Anoden (6) und die Kathoden (8) aufgrund der Rotation des Stapelrads (12) aus der jeweiligen Aufnahme (14) in ein Stapelfach (24) überführt werden, und
- wobei das Stapelfach (24) eine Kompressionseinheit (28) zur Erzeugung einer Presskraft auf die im Stapelfach (24) gestapelten Anoden (6) und Kathoden (8) bzw. auf die im Stapelfach (24) gestapelten Monozellen (42) aufweist.

5. Vorrichtung (2) nach Anspruch 4,
**dadurch gekennzeichnet,**
**dass** die Aufnahmen (14) in einer Ebene senkrecht zur Drehachse (D) bogenförmig, insbesondere spiralförmig, ausgebildet sind.

6. Vorrichtung (2) nach Anspruch 4 oder 5,
**dadurch gekennzeichnet,**
**dass** die Fördereinrichtung (34) zum Fördern der Anoden (6) in die Aufnahmen (14) des Stapelrads (12) sowie zum Fördern der Kathoden (8) in die Aufnahmen (14) jeweils mindestens ein erstes Förderband (36) aufweist.

7. Vorrichtung (2) nach Anspruch 6,
**dadurch gekennzeichnet,**
**dass** für jedes der ersten Förderbänder (36) ein parallel orientiertes zweites Förderband (38) mit zum zugeordneten ersten Förderband (36) entgegengesetzter Umlaufrichtung vorgesehen ist, so dass die Anoden (6) bzw. die Kathoden (8) beim deren Fördervorgang zwischen dem ersten Förderband (36) und dem zweiten Förderband (38) eingespannt sind.

8. Vorrichtung (2) nach Anspruch 7,
**dadurch gekennzeichnet,**
**dass** die ersten Förderbänder (36) und/oder die zweiten Förderbänder (38) in die oder eine Aussparung (20) des Stapelrads (12) hineinragen, sodass die Anoden (6) und die Kathoden (8) tangential in die Aufnahme (14) gefördert werden.

9. Vorrichtung (2) nach einem der Ansprüche 4 bis 8,
**dadurch gekennzeichnet,**
**dass** das Stapelfach (24) zur Entnahme des Elektrodenstapels (4), insbesondere zusammen mit der Kompressionseinheit (28), verfahrbar und/oder um eine zur Drehachse (D) parallele Kippachse (K) kippbar ist.

10. Vorrichtung (2) nach einem der Ansprüche 4 bis 9,
**dadurch gekennzeichnet,**
**dass** ein zur zueinander fluchtenden Ausrichtung der Anoden (6) und der Kathoden (8) vorgesehener Schieber (26) des Stapelfachs (24) und/oder der Abstreifarm (22) jeweils eine Kontaktierungsaufnahme (32) für elektrische Kontaktierungen (10) der Anoden (6) und der Kathoden (8) aufweist.

## Claims

1. Method of producing an electrode stack (4) from anodes (6) and cathodes (8) for a lithium-ion battery, in particular of an electrically driven motor vehicle, the anodes (6) or the cathodes (8) being provided with a separator,
- wherein the anodes (6) and the cathodes (8) are conveyed into receptacles (14) of a rotationally driven or rotationally drivable stacking wheel (12),
- wherein the anodes (6) and cathodes (8) accommodated in the receptacles (14) are conveyed to a stacking compartment (24) by means of a rotation of the stacking wheel (12),
- wherein the anodes (6) and the cathodes (8) are held in the region of the stacking compartment (24) by means of a stripper arm (22) and are transferred from the respective receptacle (14) into the stacking compartment (24) due to the rotation of the stacking wheel (12), the anodes (6) and the cathodes (8) being stacked alternately in the stacking compartment (24), and
- wherein the alternately stacked anodes (6) and cathodes (8) are pressed against each other in the stacking compartment (24).

2. Method according to claim 1,
**characterized in**
**that** at least one of the anodes (6) and at least one of the cathodes (8) are conveyed simultaneously into the corresponding receptacles (14) of the stacking wheel (12).

3. Method according to claim 1 or 2,
**characterized in**
**that** the speed, at which the anodes (6) and the cathodes (8) are conveyed into the respective receptacles (14) of the stacking wheel (12) is adjusted in such a way that the anodes (6) and the cathodes (8) are decelerated to a standstill before being held by the stripper arm (22) due to friction relative to the respective receptacle (14).

4. Device (2) for producing an electrode stack (4) from anodes (6) and of cathodes (8) for a lithium-ion battery, in particular according to the method of one of claims 1 to 3, comprising
- a stacking wheel (12), which can be driven in rotation about an axis of rotation (D), with circumferentially introduced receptacles (14) for the anodes (6) and for the cathodes (8) extending in an axial direction (A),
- a conveying device (34) for conveying the anodes (6) and the cathodes (8) into the receptacles (14) of the stacking wheel (12),
- a stripper arm (22), which can be inserted into a recess (20) passing through in the circumferential direction of the stacking wheel (12) and which, during a rotation of the stacking wheel (12), forms a stop for the anodes (6) and cathodes (8) accommodated in the receptacles (14), such that the anodes (6) and the cathodes (8) are transferred from the respective receptacle (14) into a stacking compartment (24) due to the rotation of the stacking wheel (12), or
- two stripper arms (22), which are arranged in the axial direction (A) on both sides of the stacking wheel (12), the stacking wheel (12) having a smaller extension in the axial direction (A) than the anodes (6) and the cathodes (8), such that, during a rotation of the stacking wheel (12), the stripper arms (22) form a stop for the anodes (6) and cathodes (8) accommodated in the receptacles (14) and protruding from the receptacles (14) in the axial direction (A), and the anodes (6) and the cathodes (8) are transferred out of the respective receptacle (14) into a stacking compartment (24) due to the rotation of the stacking wheel (12), and
- wherein the stacking compartment (24) has a compression unit (28) for generating a pressing force on the anodes (6) and cathodes (8) stacked in the stacking compartment (24) or on the monocells (42) stacked in the stacking compartment (24).

5. Device (2) according to claim 4,
**characterized in**
**that** the receptacles (14) are arcuate, in particular spiral-shaped, in a plane perpendicular to the axis of rotation (D).

6. Device (2) according to claim 4 or 5,
**characterized in**
**that** the conveying device (34) has at least one first conveyor belt (36) in each case for conveying the anodes (6) into the receptacles (14) of the stacking wheel (12) and for conveying the cathodes (8) into the receptacles (14).

7. Device (2) according to claim 6,
**characterized in**
**that** for each of the first conveyor belts (36) a parallel-oriented second conveyor belt (38) is provided with the opposite direction of rotation to the assigned first conveyor belt (36), such that the anodes (6) or the cathodes (8) are clamped between the first conveyor belt (36) and the second conveyor belt (38) during their conveying process.

8. Device (2) according to claim 7,
**characterized in**
**that** the first conveyor belts (36) and/or the second conveyor belts (38) protrude into the or a recess (20) of the stacking wheel (12), such that the anodes (6) and the cathodes (8) are conveyed tangentially into the receptacle (14).

9. Device (2) according to one of claims 4 to 8,
**characterized in**
**that** the stacking compartment (24) can be moved and/or tilted about a tilting axis (K) parallel to the axis of rotation (D), in particular together with the compression unit (28), in order to remove the stack of electrodes (4).

10. Device (2) according to one of claims 4 to 9,
**characterized in**
**that** a slide (26) of the stacking compartment (24) provided for orienting the anodes (6) and the cathodes (8) in alignment with each other and/or the stripper arm (22) each has a contacting receptacle (32) for electrical contacts (10) of the anodes (6) and the cathodes (8).

## Revendications

1. Procédé de fabrication d'un empilement d'électrodes (4) constitué d'anodes (6) et de cathodes (8) pour une batterie au lithium-ion, notamment d'un véhicule automobile à propulsion électrique, les anodes (6) ou les cathodes (8) étant pourvues d'un séparateur,
- dans lequel les anodes (6) et les cathodes (8) sont transportées dans des réceptacles (14) d'une roue d'empilage (12) entraînée en rotation ou pouvant être entraînée en rotation,
- dans lequel les anodes (6) et les cathodes (8) reçues dans les réceptacles (14) sont transportées vers un compartiment d'empilage (24) au moyen d'une rotation de la roue d'empilage (12),
- dans lequel les anodes (6) et les cathodes (8) sont maintenues dans la zone du compartiment d'empilage (24) au moyen d'un bras de raclage (22) et sont transférées hors du réceptacle (14) respectif dans le compartiment d'empilage (24) en raison de la rotation de la roue d'empilage (12), les anodes (6) et les cathodes (8) étant empilées en alternance dans le compartiment d'empilage (24), et
- dans lequel les anodes (6) et les cathodes (8) empilées en alternance sont pressées les unes contre les autres dans le compartiment d'empilage (24).

2. Procédé selon la revendication 1,
**caractérisé en ce**
**qu'**au moins l'une des anodes (6) et au moins l'une des cathodes (8) sont transportées simultanément dans les réceptacles (14) correspondants de la roue d'empilage (12).

3. Procédé selon la revendication 1 ou 2,
**caractérisé en ce**
**que** la vitesse de transport des anodes (6) et des cathodes (8) dans les réceptacles (14) respectifs de la roue d'empilement (12) est réglée de telle sorte que les anodes (6) et les cathodes (8) avant le maintien sont freinées à l'arrêt par le bras de raclage (22) en raison d'un frottement par rapport au réceptacle (14) respectif.

4. Dispositif (2) de fabrication d'un empilement d'électrodes (4) constitué d'anodes (6) et de cathodes (8) pour une batterie lithium-ion, notamment selon le procédé de l'une des revendications 1 à 3, comportant
- une roue d'empilement (12) pouvant être entraînée en rotation autour d'un axe de rotation (D) et comportant des réceptacles (14) pour les anodes (6) et pour les cathodes (8), qui sont ménagés sur la périphérie et s'étendent dans la direction axiale (A),
- un dispositif de transport (34) pour transporter les anodes (6) et les cathodes (8) dans les réceptacles (14) de la roue d'empilage (12),
- un bras de raclage (22), qui peut être introduit dans un évidement (20) continu dans la direction périphérique de la roue d'empilage (12) et qui, lors d'une rotation de la roue d'empilage (12), forme une butée pour les anodes (6) et les cathodes (8) logées dans les réceptacles (14), de sorte que les anodes (6) et les cathodes (8) sont transférées, en raison de la rotation de la roue d'empilage (12), du réceptacle (14) respectif dans un compartiment d'empilage (24), ou
- deux bras de raclage (22), qui sont disposés en direction axiale (A) de part et d'autre de la roue d'empilage (12), la roue d'empilage (12) comprenant une extension en direction axiale (A) inférieure à celle des anodes (6) et des cathodes (8), de sorte que les bras de raclage (22) forment, lors d'une rotation de la roue d'empilage (12), une butée pour les anodes (6) et les cathodes (8) logées dans les réceptacles (14) et dépassant des réceptacles (14) dans la direction axiale (A), et que les anodes (6) et les cathodes (8) sont transférées, en raison de la rotation de la roue d'empilage (12), hors du réceptacle respectif (14) dans un compartiment d'empilage (24), et
- dans lequel le compartiment d'empilage (24) comprend une unité de compression (28) pour générer une force de pression sur les anodes (6) et les cathodes (8) empilées dans le compartiment d'empilage (24) ou sur les monocellules (42) empilées dans le compartiment d'empilage (24).

5. Dispositif (2) selon la revendication 4,
**caractérisé en ce**
**que** les réceptacles (14) sont réalisés en forme d'arc, en particulier en forme de spirale, dans un plan perpendiculaire à l'axe de rotation (D).

6. Dispositif (2) selon la revendication 4 ou 5,
**caractérisé en ce**
**que** le dispositif de transport (34) comprend respectivement au moins une première bande transporteuse (36) pour transporter les anodes (6) dans les réceptacles (14) de la roue d'empilage (12) ainsi que pour transporter les cathodes (8) dans les réceptacles (14).

7. Dispositif (2) selon la revendication 6,
**caractérisé en ce**
**que**, pour chacune des premières bandes transporteuses (36), il est prévu une deuxième bande transporteuse (38) orientée parallèlement avec un sens de rotation opposé à la première bande transporteuse (36) associée, de sorte que les anodes (6) ou les cathodes (8) sont serrées entre la première bande transporteuse (36) et la deuxième bande transporteuse (38) lors de leur processus de transport.

8. Dispositif (2) selon la revendication 7,
**caractérisé en ce**
**que** les premières bandes transporteuses (36) et/ou les deuxièmes bandes transporteuses (38) pénètrent dans le ou un évidement (20) de la roue d'empilage (12), de sorte que les anodes (6) et les cathodes (8) sont transportées tangentiellement dans le réceptacle (14).

9. Dispositif (2) selon l'une quelconque des revendications 4 à 8,
**caractérisé en ce**
**que** le compartiment de pile (24) peut être déplacé pour le prélèvement de la pile d'électrodes (4), en particulier conjointement avec l'unité de compression (28), et/ou peut être basculé autour d'un axe de basculement (K) parallèle à l'axe de rotation (D).

10. Dispositif (2) selon l'une quelconque des revendications 4 à 9,
**caractérisé en ce**
**qu'**un coulisseau (26) du compartiment d'empilement (24) et/ou du bras de raclage (22) prévu pour l'alignement mutuel des anodes (6) et des cathodes (8) comprend respectivement un réceptacle de mise en contact (32) pour des mises en contact électriques (10) des anodes (6) et des cathodes (8).
